Europäisches Patentamt

European Patent Office

Office européen des brevets

(19)

(11) Veröffentlichungsnummer: **0 207 110**
**B1**

(12) **EUROPÄISCHE PATENTSCHRIFT**

(45) Veröffentlichungstag der Patentschrift:
24.05.89

(51) Int. Cl.⁴: **A 01 L 3/00**, A 01 L 5/00

(21) Anmeldenummer: **86900108.1**

(22) Anmeldetag: **05.12.85**

(86) Internationale Anmeldenummer:
**PCT/EP 85/00674**

(87) Internationale Veröffentlichungsnummer:
**WO 86/03936 (17.07.86** Gazette 86/17)

(54) **MIT GURTEN ANBRINGBARER PFERDEHUFSCHUH.**

(30) Priorität: **29.12.84 DE 8438230 U**

(43) Veröffentlichungstag der Anmeldung:
**07.01.87 Patentblatt 87/2**

(45) Bekanntmachung des Hinweises auf die Patenterteilung:
**24.05.89 Patentblatt 89/21**

(84) Benannte Vertragsstaaten:
**DE GB**

(56) Entgegenhaltungen:
**DE-A- 3 223 187**
**DE-C- 260 961**

(73) Patentinhaber: **DALLMER, Helmuth, Alte Landstrasse 3,
D-2125 Salzhausen - Putensen (DE)**

(72) Erfinder: **DALLMER, Helmuth, Alte Landstrasse 3,
D-2125 Salzhausen - Putensen (DE)**

(74) Vertreter: **Fritz, Herbert, Dipl.-Ing., Mühlenberg 74,
D-5760 Arnsberg 1 (DE)**

**Beschreibung**

Die Erfindung bezieht sich auf einen mit Gurten anbringbaren Pferdehufschuh, der aus einem hufeisenförmigen Bodenteil mit einer dem Pferdehuf angepaßten hochstehenden Wand, aus einem als Kappe ausgebildeten beweglichen Fersenteil und aus zwei von Schlaufen aufgenommenen Spanngurten besteht. Dabei ist das Fersenteil an jeder Seite oben durch einen an der hochstehenden Wand anliegenden Streifen fortgesetzt.

Ein Hufschuh dieser Art kann am Pferdehuf angeschnallt und angepaßt werden, man braucht ihn nicht anzunageln oder anzukleben. Bei einem bekannten Hufschuh dieser Art (DE-A-3 223 187) sind für das Anschnallen zwei nicht näher beschriebene oder dargestellte Schnallenbänder vorgesehen.

Die Aufgabe der Erfindung besteht in einer Weiterentwicklung des genannten Standes der Technik in bezug auf einen verbesserten festen Halt am Huf.

Diese Aufgabe wird durch die kennzeichnenden Merkmale des Anspruchs 1 gelöst. Die Unteransprüche haben alternative Maßnahmen zum Inhalt, die im Hinblick auf die vorgenannte Aufgabe besonders zweckdienlich sind.

Bei einem Hufschuh nach der Erfindung ergibt sich ein besonders guter Halt am Huf, insbesondere durch die Spannvorrichtung, die es möglich macht, durch Drehen des Drehknopfes allmählich eine beliebig hohe Spannung der Gurte zu erreichen. Dadurch, daß die Spannvorrichtung selbstsperrend ist, bleibt die Spannung der Gurte auch erhalten. Erst durch bewußtes Drehen des Drehknopfes in Gegenrichtung kann die Spannung gelöst werden, also nur wenn der Hufschuh wieder abgenommen werden soll. Die Spannung in den Gurten ergibt durch die kreuzweise Anordnung einen gleichmäßigen Druck auf die Rückwand der Kappe. Nach einer bevorzugten Ausführungsform der Erfindung ist die Verbindung zwischen Kappe und Vorderteil an jeder Seite durch zwei an der Kappe angeformte Streifen hergestellt, ein oberer Streifen und ein unterer Streifen, die beide an der Wand anliegen, wobei die beiden Gurten jeweils auf den Streifen liegen und diese fest anpressen, wenn sie Spannung erhalten. Der untere Streifen wird dabei verschiebbar von einer an der Wand angeformten Schlaufe aufgenommen. Der obere Streifen liegt frei auf der Wand, hat indessen aber selbst eine Schlaufe, wo der Gurt geführt ist. Auch beim Lösen der Gurte bleibt somit eine Verbindung zwischen der Kappe und dem Vorterteil des Hufschuhs bestehen, weil an jeder Seite der untere Streifen von einer Schlaufe der Wand aufgenommen wird. Durch Verschieben kann man die Kappe mehr nach hinten oder mehr nach vorne einstellen. Durch einen Anschlag am unteren Streifen ist das Maximum des Rückschubes festgelegt.

Die Verbindung zwischen dem unteren Gurtende und der Wand erfolgt durch eine Schraube, die gelöst werden kann. Für die Schraube sind entweder am Gurt oder in der Wand oder in beiden Teilen Löcher vorgesehen. Man kann also die Verbindungsstelle weiter nach vorne oder weiter hinten festlegen, je nachdem wie die Kappe eingestellt ist.

Gemäß der weiteren Erfindung sind die hinteren Enden des Bodenteils durch ein aufgeschraubtes Metall- oder Kunststoffband verbunden. Durch die Auswahl eines längeren oder kürzeren Bandes ist die Breite des Hufschuhs einstellbar, zwecks Anpassung an die Breite des Pferdehufes.

Im folgenden wird ein Ausführungsbeispiel der Erfindung beschrieben unter Bezugnahme auf die beiliegenden Zeichnungen.

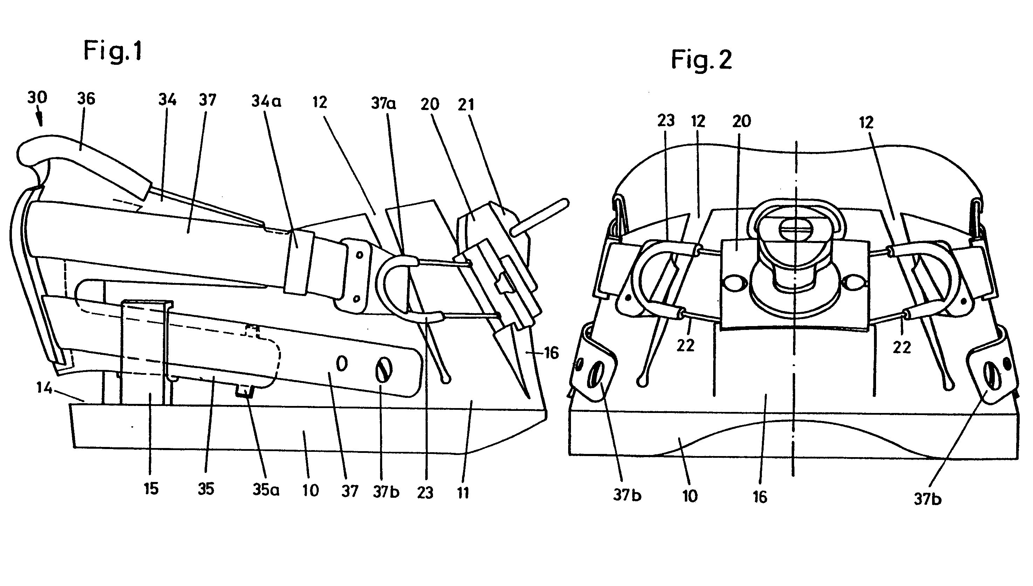

Fig. 1 zeigt eine Ansicht eines Hufschuhs nach der Erfindung von der Seite gesehen;

Fig. 2 ist eine Ansicht von vorne;

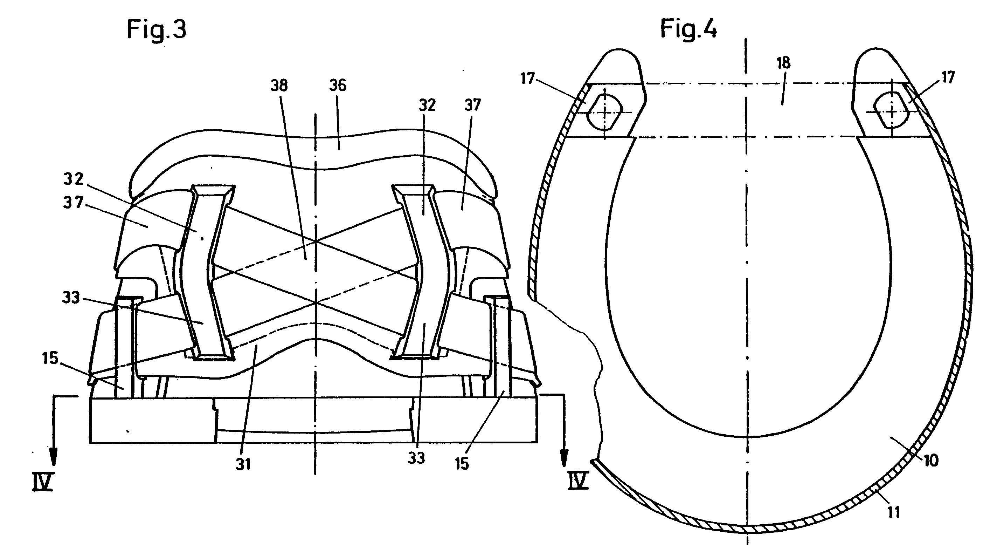

Fig. 3 ist eine Ansicht von hinten;

Fig. 4 ist ein Schnitt nach IV-IV von Fig. 3.

Der Hufschuh besteht aus einem Vorderteil und aus einer Kappe, die beide Formteile aus Kunststoff sind. Mit Hilfe zweier Gurte 37 werden diese beiden Teile am Pferdehuf angeschnallt.

Das Vorderteil hat ein hufeisenförmiges Bodenteil 10, das sich nach oben hin in eine Wand 11, dem Pferdehuf angepaßt, fortsetzt. An der Wand sind vorne nach oben offene Schlitze 12, um die Anpassungsmöglichkeit der Wand an den Pferdehuf zu verbessern. Vorne ist auf einer Konsole 16 eine Spannvorrichtung 20 mit einem Drehknopf 21 angebracht. Durch Drehen des Drehknopfes können zwei Schlingen 22, die jeweils an einer Seite der Spannvorrichtung vorstehen, nach vorne gezogen oder zurückgeschoben werden. Die Schlingen werden beweglich von Rohrbogen 23 aufgenommen.

An den beiden Enden des Bodenteils 10, wo jeweils die Wand 11 ansetzt, sind Absätze 14 gebildet, wo die Kappe 30 aufsitzen kann. Die beiden Enden des Bodenteils können durch ein Metallband 18 miteinander verbunden werden. Zur Aufnahme des Metallbandes sind am Bodenteil Ausnehmungen 17 mit jeweils einer Öffnung für die Schraube gebildet.

Die Kappe 30 hat eine Rückwand 31 mit einem Polster 36. An der Rückwand sind jeweils seitlich übereinanderliegende Schlaufen 32 und 33 zur Aufnahme der Bänder für das Spannen geformt. Nach vorne hin schließen an die Rückwand 31 an jeder Seite zwei Streifen an, und zwar ein oberer Streifen 34 und ein unterer Streifen 35. Der untere Streifen ist durch eine Schlaufe 15 in der Seitenwand geführt. Der Streifen 35 ist also in der Schlaufe 15 verschiebbar. Seine Endstellung ist durch einen Anschlag 35a begrenzt.

Der obere Streifen 34 der Kappe liegt frei auf dem oberen Teil der Wand 11.

Für das Festspannen des Hufschuhs am Pferdehuf sind zwei Gurte 37 vorgesehen. Im Bereich der Kappenrückwand 31 sind die beiden Gurte über Kreuz geführt (Bänderkreuz 38), wobei die Gurte durch die oberen bzw. unteren Schlaufen 32 und 33 aufgenommen werden. An jeder Seite ist der betreffende Gurt von der oberen Schlaufe 32 aus nach vorne geführt, wobei er auf dem oberen Streifen 34 liegt. Dort ist der Gurt durch eine Schlaufe 34a des oberen Streifens geführt. Am oberen Ende eines jeden Gurtes ist ein Haken 37a, der am Rohrbogen 23 der Schlinge 22 eingehakt ist. Das untere Gurtende 37b ist an jeder Seite unten an der Wand mit Hilfe einer Schraube festgehalten. Zur Aufnahme der Schraube sind im Gurt bzw. in der Wand mehrere Löcher vorgesehen, damit der Festhaltepunkt mehr nach vorne oder mehr nach hinten verlegt werden kann.

Beim Anbringen des Pferdehufschuhs werden die Gurte aus den Schlingen ausgehakt, so daß man die Möglichkeit hat, die Kappe so weit nach hinten zu schieben, daß der Hufschuh über den Pferdehuf gebracht werden kann. Man schiebt dann die Kappe nach vorne, hakt die Gurtenden 37a ein und spannt die Gurte durch Drehen am Drehknopf 21 so fest an, wie es für einen festen Sitz erforderlich ist. Die Spannvorrichtung ist selbstsperrend, das heißt, daß die Schlingen in ihrer Spannstellung bleiben, solange der Drehknopf nicht zurückgedreht wird.

## Patentansprüche

1. Mit Gurten anbringbarer Pferdehufschuh, der aus einem hufeisenförmigen Bodenteil (10) mit einer dem Pferdehuf angepaßten hochstehenden Wand (11), aus einem als Kappe ausgebildeten beweglichen Fersenteil (30) und aus zwei von Schlaufen (32, 33) aufgenommenen Spanngurten (37) besteht, wobei das Fersenteil an jeder Seite oben durch einen an der hochstehenden (11) anliegenden Streifen fortgesetzt ist, dadurch gekennzeichnet, daß vorne an der Wand (11) mittig eine Spannvorrichtung (20) angebracht ist, die aus einem Drehknopf (21) und zwei Schlingen (22) besteht, wobei jeweils eine Schlinge seitlich nach rechts und eine seitlich nach links gerichtet ist und die Schlingen (22) durch Drehen des Drehknopfes (21) selbstsperrend verschiebbar sind, und daß zwei Gurte (37) vorgesehen sind, von denen je ein Gurtende (37a) in eine der Schlingen (22) einhakt, während das andere Gurtende (37b) auf der gegenüberliegenden Seite unterhalb der dort befindlichen Schlinge (22) festgehalten wird, wobei die Gurte (37) in Höhe der Spannvorrichtung (20) nach hinten verlaufen, an der Rückwand (31) des Fersenteils durch zwei obere Schlaufen (32) und zwei untere Schlaufen (33) über Kreuz geführt und dann nach vorne zur Befestigung unterhalb der Schlingen (22) geführt werden.

2. Hufschuh nach Anspruch 1, dadurch gekennzeichnet, daß seitlich ein oberer Streifen (34) und ein unterer Streifen (35) der Kappe an der Wand (11) anliegt und die Gurte jeweils seitlich auf einem Streifen liegen.

3. Hufschuh nach Anspruch 2, dadurch gekennzeichnet, daß an jeder Seite der untere Streifen (35) in einer Schlaufe (15) der Wand verschiebbar geführt ist.

4. Hufschuh nach Anspruch 3, dadurch gekennzeichnet, daß der untere Streifen (35) endseitig einen Anschlag (35a) hat.

5. Hufschuh nach Anspruch 2, dadurch gekennzeichnet, daß am oberen Streifen (34) endseitig eine Schlaufe (34a) zur Aufnahme eines Gurtes (37) gebildet ist.

6. Hufschuh nach Anspruch 1, dadurch gekennzeichnet, daß zur Befestigung des jeweils unteren Gurtendes (37b) eine Schraubverbindung vorgesehen ist, zu deren Verstellbarkeit mehrere Löcher vorgesehen sind.

7. Hufschuh nach Anspruch 1, dadurch gekennzeichnet, daß die Enden des Bodenteils (10) durch ein Band (18) verbunden sind, dessen Ende von Ausnehmungen (17) im Bodenteil aufgenommen werden, wobei für die jeweilige Verbindung zwischen Band und Bodenteil eine Schraubverbindung vorgesehen ist.

## Claims

1. Shoe for a hoof of a horse which can be attached by means of belts, consisting of a horseshoeshaped bottom part (10) with an upright wall (11) adapted to the hoof of the horse, a movable heel part (30) formed as a cap and tensioning belts (37) received by two loops (32, 33), the heel part being continued at each side at the top by a strip engaging the upright wall (11), characterised in that at the front side of the wall (11) and in the centre thereof there is provided a tensioning device (20) consisting of a rotary knob (21) and two loops (22), one loop being directed laterally to the right and one to the left, the loops (22) being shiftable, by turning the rotary knob (21), in a self-locking manner, and in that two belts (37) are provided of which one belt end (37a) hooks into one of the loops (22) whereas the other belt end (37b) is locked on the opposite side below the loop (22) provided there, the belts (37) extending at the level of the tensioning device (20) rearwardly, being guided at the back wall (31) of the heel part through two upper loops (32) and two lower loops (33) crosswise and then being guided forwardly for being fastened below the loops (22).

2. Shoe for a hoof as claimed in claim 1, characterised in that an upper strip (34) and a lower strip (35) of the cap each engage the wall (11) and the belts each lie laterally on a strip.

3. Shoe for a hoof as claimed in claim 2, characterised in that the lower strip (35) is at each side guided in a loop (15) of the wall in a shiftable manner.

4. Shoe for a hoof as claimed in claim 3, characterised in that the lower strip (35) has a detent (35a) at its end.

5. Shoe for a hoof as claimed in claim 2, characterised in that at the upper strip (34) there is formed at the end thereof a loop (34a) for receiving a belt (37).

6. Shoe for a hoof as claimed in claim 1, characterised in that for fastening the lower belt end (37b) there is provided a screw connection for the adjustability of which several holes are provided.

7. Shoe for a hoof as claimed in claim 1, characterised in that the ends of the bottom part (10) are joined by a strap (18) the ends of which are received by recesses (17) in the bottom part, for the connection between strap and bottom part a screw connection being provided in each case.

## Revendications

1. Soulier pour sabot de cheval, à fixer par de sangles, qui comprend une partie de base (10) en forme de fer à cheval, avec une paroi surélevée (11) adaptée au sabot du cheval, une partie de talon (30) mobile, réalisé comme un contrefort, et deux sangles de traction (37) reçues dans des crochets fermés (32, 33), la partie de talon se prolongeant de part et d'autre, à la partie supérieure, par une bande située sur la paroi surélevée (11), caractérisé en ce qu'un dispositif de tension (20) est prévu au milieu du devant de la paroi (11), et se compose d'un bouton rotatif (21), et de deux boucles (22), une boucle étant dirigée latéralement vers la droite, et une boucle vers la gauche, et les boucles (22) étant ajustées de manière autoblocante par rotation du bouton rotatif (21), et en ce qu'il comprend deux sangles (37) dont une extrémité (37a) s'accroche chaque fois dans l'une des boucles (22), tandis que l'autre extrémité de sangle (37b) est fixée au côté opposé, en dessous de la boucle (22) qui s'y trouve, tandis que les sanles (37) s'étendent vers l'intérieur à hauteur du dispositif de tension (20), sont guidées pour se croiser au dos (31) de la partie de talon par deux crochets fermés (32) supérieure et deux crochets fermés inférieurs (33) et sont ensuite guidées vers le devant pour être fixées en dessous des boucles (22).

2. Soulier pour sabot de cheval selon la revendication 1, caractérisé en ce que le contrefort est fixé à la paroi (11) latéralement, chaque fois par une bande supérieure (34) et une bande inférieure (35), et les sangles se trouvent chaque fois latéralement sur une bande.

3. Soulier pour sabot de cheval selon la revendication 2, caractérisé en ce que la bande inférieure (35) est guidée de manière ajustable dans un crochet fermé (15) de la paroi, de chaque côté.

4. Soulier pour sabot de cheval selon la revendication 3, caractérisé en ce que la bande inférieure (35) possède un arrêt (35a) à son extrémité.

5. Soulier pour sabot de cheval selon la revendication 2, caractérisé en ce qu'un crochet fermé (34a) est prévu à l'extrémité de la bande supérieure (34) pour recevoir une sangle (37).

6. Soulier pour sabot de cheval selon la revendication 1, caractérisé en ce qu'une liaison vissée est prévue pour fixer chaque extrémité (37b) de la sangle inférieure, plusieurs trous étant prévus pour son ajustement.

7. Soulier pour sabot de cheval selon la revendication 1, caractérisé en ce que les extrémités de la partie de base (10) sont reliées par une bande (18) dont les extrémités sont reçus dans des évidements (17) dans la partie de base, tandis qu'une liaison visée est prévue pour chaque liaison entre la bande et la partie de base.

Fig.2

Fig.1

Fig.4

Fig.3